# EUROPEAN PATENT APPLICATION

(11) **EP 1 425 975 A1**
(43) Date of publication of application: **09.06.2004**
(21) Application number: 02080140.3
(22) Date of filing: 08.12.2002
(51) Int. Cl.: A23G 1/18, A23G 1/04

(54) **Apparatus for treating chocolate mass**

(71) Applicant: AASTED-MIKROVERK APS, 3520 Farum (DK)
(72) Inventor: Kongstad, Anders Conradsen, 1621 Copenhagen V (DK)
(74) Representative: Heiden, Finn

(57) **Abstract**

Process and apparatus (3) for tempering a continuous main flow (1) of chocolate or chocolate-like mass. At the end of a first step (S1) the main flow (S1) is cooled down to below 37°C, in a second step (S2) is influenced to creation of stable crystals, and in a third step (S3) is stabilized for growth and further creation of crystals.

A secondary flow of chocolate is branched off from the main flow (1) in the third step (S3) via an opening (5), and is being returned to the second step (S2) of the main flow in a feed back conduit (7).
A synergic effect in the process of crystallisation is created, so that a content of stable crystals having microstructure is builded up faster and more effectively than without the feed back.

## Description

The present invention concerns apparatuses for continuous heat treating of flowing chocolate mass making it ready for subsequent forming into articles. Traditionally, the process is characterised as a tempering process irrespective of the particular temperature steps the chocolate is subjected to during the process. Decisive is, that by the tempering is created stable crystals in the chocolate mass of a kind and amount, so that the chocolate subsequently being formed into or upon articles is capable of solidifying into an acceptable structure for an edible chocolate article. Acceptable structure means, that a dominating amount of stable crystals such as the βV crystals are present in the solidified chocolate article, so that it possesses a crispy break, good taste and mouth feeling and an acceptable resistance to fat bloom. All characteristics which are well known to deal with within the field of tempering chocolate mass.

The chocolate mass may have a dominating content of genuine cocoa butter in the cocoa mass content of the chocolate or simply be a so-called chocolate-like mass by which most of the cocoa mass is substituted with other kinds of fats or oils such as palm-kernel oils. However in the chocolate-like masses at least a minor content of genuine cocoa butter must be present to achieve desirable stable beta crystals. Then the particular mass in question must be capable of creating stable crystals when solidifying, irrespective of the treatment it is being subjected to after having left the tempering process.

After the tempering process the mass may be deposited in many ways, for example as a curtain or covering of chocolate upon pre-made articles for making well-known bar-shaped articles or directly into moulds for making articles such as for example shells. Edible articles such as bars, biscuits or bakery articles are generally excellent to provide with a chocolate covering layer.

The mass may also be deposited as lumps directly upon a supporting surface such as on a conveyor subsequently being pressed by the action of suspended, cooled plungers which is pressed into the mass. By the covering process the chocolate is typically required in a highly liquid state, which requirement normally applies by more traditional moulding processes as well. By newer techniques such as moulding and pressing subjecting the chocolate mass to cold plungers or stamps, more thick, pasta-like or viscous states may apply.

If shells or shell-like articles are made, then after the shells have solidified, they may be filled with a centre mass of a creamy or liquid food material, which differs from that of the shell material. The centre mass could be an alcohol containing mass, a sugar containing mass or a creamy fondant mass, simply any of the centre masses known to the chocolate industry. Finally, a chocolate covering layer may be deposited for closing the centre mass off, thereby creating a complete article. The articles could have any shape, size and configuration and could typically be "pralines", tablets, or slabs such as for example the well-known quadrangular slabs or tablets with all kind of centre masses, crunchy or creamy.

Regardless of the subsequent treating subjected to the tempered chocolate mass before it is being deposited for any type of article, decisive is, that it has a content of stable crystals securing the solidification into a usable quality product when leaving the tempering process.

Generally, chocolate masses are suspensions of non-fat particles such as sugar, milk powders and cocoa solids mixed up with a liquid fat constituent. Often, the fat phase comprises genuine cocoa butter of until around 30%, but may comprise substitutes as well. Such substitutes can be in the form of other types of fat-containing oils. Chocolate types where the cocoa butter has been replaced wholly or partly by other fats are often named commercially as compound chocolate, in which the cocoa butter has been replaced by palm-kernel oil. Mass made of 100% fat in the form of cocoa butter or the like as compound is also possible.

So for chocolate or chocolate-like masses it is decisive, that whether the fat phase constitutes of genuine cocoa butter or substitutes thereof, the fat phase is capable of crystallizing into stable crystal types, such as the β-crystals developing in genuine cocoa butter when the mass solidifies.

By traditional continues tempering of a main flow without addition of any seed the mass is generally brought to around 40-50°C, where after it is being cooled to around 25-34°C, so that crystallisation is initiated. Then the mass is reheated around 0,5-2,0°C for re-melting most of the in-stable crystals in the mass, however preserving a content of stable βV-crystals, which melts at a higher temperature than the in-stable crystals. The stable crystals are preserved in the mass ready for depositing in an amount of typically 0,01% - 5%, preferably in an amount of 0,1% - 2%.
However, as the traditional processes of tempering besides the highly desirable stable βV-crystals unavoidably creates a content of more or less instable crystals such as the α and βIV-crystals recent attempts have been made for securing a content of only the desirable type of crystals in the mass simply by adding a content of seeding crystals in powder-form into a liquid, temperature controlled chocolate mass.

The tempering capacity of a tempering apparatus is defined as the maximal capability in kilograms pro hour to temper a fat-containing mass having a predetermined content of for example 5% of a desired type, stable β-crystals, such as the βV-crystals. When comparising the tempering capacity of two different processes it is then important, that the content of the tempered masses are as identical as possible.

By the well-known tempering techniques by which the chocolate mass runs straight through the tempering apparatus without any addition of seed material, is always aimed at creating a mass the content of crystals predominantly contains stable beta V crystals. However in practice lower melting and more unstable crystals such as the α and βIV-crystals are unavoidable. In the ready solidified article such more "unstable" crystals will with time convert to higher melting and more stable crystals. By doing so, latent heat is released which will melt up a small amount of fat - which will be visible as a thin "gray" layer at the outside of the article - the well-known "fat bloom". In excess to the unacceptable graying of the aticle fat bloom also gives rise to changes in taste towards a more bitter and undesirable direction.

By the known tempering techniques, the mass passes through a first and a second step containing surfaces controlled by cooling water, so that heat is removed from the chocolate then being cooled down to a lower temperature. The chocolate typically has a temperature between 40-50°C when it is pumped to the tempering machine. In the first cooling step the temperature of the chocolate mass is lowered to a crystal survival temperature, which could be around 30-32°C. In the second cooling step the chocolate is caused to pass over cold surfaces causing creation of crystals in the mass. At this temperature all kinds of crystals are being initiated in the chocolate, lower melting as well as higher melting desirable βV crystals. The temperatures of the cold surfaces could advantageously be 12-20°C, however temperatures around 20-25°C could apply as well as long as the step is working as an effective crystal creation stage.

In a subsequent third step the crystals are stabilized as growth of already made crystals takes place as well as further crystallisation. The temperature is normally raised slightly around 1-2°C from the second step and is kept so high and constant that mainly only βV and higher melting crystals should survive with time. However, due to the continuous nature of the process and the limited time available in each step also lower melting and more unstable crystals such as the α and βIV-crystals remains in the mass. The mass is typically stirred in all three steps and the addition of heat and or cooling could apply in the third step depending on the energy balance achieved. In the third step heat is normally applied to the mass for achieving the desired slight temperature rise and constant temperature conditions at least at the end of the step, however intensive stirring of the mass adding heat into the mass could require that slight cooling should be applied, so the mass temperature will not rise above the desired level.

In the prior art several attempts have been made for achieving a tempered chocolate or chocolate-like mass having a content of crystals, which is as stable and "high melting" as possible. The theoretical optimum to be reached in practice is when any crystals having lower melting temperatures than the βVI-crystals are avoided in the ready tempered mass before solidification thereof.

However, it is well-known, that a content of crystals in the mass with a dominating content of βVI-crystals gives rise to a bitter taste, waxy consistence and tough character of the solidified article, which will be difficult to melt with the body temperature in the mouth. The chocolate will have the character of so-called "desert" chocolate having a high melting temperature around 35-40°C.

Within the prior knowledge since middle of the last century is, that by preserving a slight content of β VI crystals in the mass as well as a content of β V crystals, then by solidification the β VI crystals which is small in dimension of microcharacter will effect a solidification of the finished mass into a microcharacteristic crystalsstructure of a dense nature constituting a dominating content of β V crystals and a slight amount of β VI crystals. Then the taste of the achieved product is fully acceptable as being determined by the high content of β V crystals, and the bitter taste influence from slight content of β VI crystals will be vanishing. The fat bloom resistance will be excellent due to the dense structure of the microcharacteristic crystals in the mass. However, well within the prior knowledge is also that this is only reachable by a batch tempering principle where sufficient time in the size of many hours or even days is available for the controlled creation of β V crystals as well as for the transformation into β VI crystals and concomitant melting out of the lower melting crystals such as the α and the β IV crystals. The mass is recirculated many times from a batch holding tank and through an effective tempering apparatus exerting shear to the mass before being returned to the tank.

An apparatus for performing a batch tempering process of the above kind is known from DE 2602877, WINKLER & DÜNNEBIER. The aim is to avoid large and more course crystals and provide small stable crystals such as of microstructure in the chocolate mass during tempering. By a zyzlothermich process the mass is recycled from a batch in a stirring vessel, through a tempering apparatus comprising a mixing screw and returned to the holding vessel many times during at least 1 hour until stable crystal nuclei is built up in the batch of the vessel. The temperature of the chocolate mass is kept between 33 and 34,5°C in the stirring vessel and the cooling water flowing through the tempering apparatus has a temperature of 25°C in the beginning of the process whereafter the temperature is lowered to around 18-20°C. The temperature level indicates that nuclei of β V crystals are builded up in the batch. When the batch has reached a sufficient level the ready batch is supplied to a depositor, a moulding apparatus or the like which forms the mass into ready solidified articles.
When the batch is ready used the moulding and production of articles is consequently stopped and can not be resumed before a new batch is made and ready for use, i.e. until after at least 1 hour.

A similar principle is known from WO 00/72695 by which the created batch is used as seed agent being mixed into a main flow of chocolate or chocolate-like mass cooled down to a temperature at which the seed crystals created during the batch run is able to survive in the mixed main flow. The main flow is then supplied to a consuming device in a factory such as a depositor, a moulding apparatus or the like.

In the batch circuit a tempering machine creates β V crystals and β VI crystals under severe shear conditions as liquid and genuine cocoa butter from a stirred conditioning vessel is circulated through the tempering apparatus and returned to the conditioning vessel. Lower melting crystals such as α crystals and βIV crystals are unavoidably created as well due to the cold surfaces of the tempering machine, but is however remelted again in the stirring vessel as a temperature of the mass is kept being sufficiently high for principally only β VI crystals to survive around 32-35°C. A certain time span of at least several hours is necessary for building up the batch with a content of 50-95% β VI crystals of the total crystal content of the cocoa butter batch in the stirring vessel.

Apparently, the chocolate mass in the stirred conditioning vessel requires a cocoa butter mass with a content of already made stable beta VI crystals for starting up the batch re-circulating mode continuously providing the desired beta VI crystals.

The batch is then mixed with the main flow in a content of 0,01 % - 0,2% thereof, so that a resulting flow of seeded and pre-crystallised chocolate mass is provided.

The so created and pre-crystallised chocolate mass is thereafter pumped in a conduit to depositors different places in the manufacturing plant where articles are made, for example for moulding of the chocolate in moulds, for being deposited as a curtain for covering of pre-made articles or for whatever the requirement in the factory may be.

However, when the batch is finished and the stirring vessel is empty, the production must be stopped until a new batch is ready. The disclosure is silent about the problems of adapting the making of the batches to the capacity requirement of the continuous production. Under all circumstances the batch circuit requires separate supply of genuine cocoa butter for the batch to retain its level of stable seed crystals or a total refill of the stirring vessel is required each time a new batch is needed. This is extremely difficult in a continuously running chocolate production, in which typically 1000-10.000 kg/hour of chocolate articles are produced. The required apparatus and set-up of the WO disclosure furthermore seems to be highly complicated, expensive and requires time consuming surveillance for achieving the necessary seed quality and content.

If the unit is then installed as the "heart" in a production plant delivering seed mass to all chocolate mass in the factory, it becomes especially vulnerable to deviations affecting the control thereof. If the heart is not functioning properly the hole plant is malfunctioning. A huge apparatus investment is necessary in the plant and the crystalseeding manufacturing and conditioning is suspected to be both expensive to run as well as time consuming to start up due to the required at least 10 days period before the β VI crystals are ready made for a continuously running production.

DE 10118354 C1 SOLLICH discloses a different solution by which the seeding crystals are already made in powderform being seeded into a branched off flow of chocolate recycled to a main flow.

Thermally treated seed crystals in powderform are suspended into a the branched off chocolate stream in a mixer and supplied to a mixing stage at the end of a tempering machine, i.e. at a position after the cooling stages. The secondary chocolate stream may be branched off at the outlet of the tempering machine, at the end of the cooling stage or at the holding tank.

Though the process through the tempering apparatus is continuous it requires the separate addition of seed material in the form of powder to the process. The powder supply in it self is cumbersome and vulnerable to the whole process and must be carried out with accuracy. Several technical problems could be involved in this, especially as a constant amount of the desirable crystals in the continuous end flow of chocolate requires exact continuous supply per time unit of powder and fully homogenous mixing thereof into the main flow of chocolate being seeded.

The problem to solve with the present invention is to provide a process and apparatus which creates a dominating content of stable crystals having a microstructure directly in a continuous main flow of chocolate or chocolate mass. The necessity of the separate addition of such desired seed crystals into the mass is then avoided.

By the process according to the present invention a continuous main flow of chocolate or chocolate-like mass, is at the end of a first step cooled down to below 37°C, is in a second step influenced to creation of stable crystals, and is in a third step stabilized for growth and further creation of crystals.

The new process is characterised in, that a secondary flow of chocolate is branched off from the main flow in the third step, and is being returned to the second step of the main flow in a feed back.

The feed back provides a synergic effect in the process of crystallisation so that a content of stable crystals having microstructure is builded up in the third step of the process. The content is surprisingly high in comparison with the prior continuous tempering processes and gives rise to desirable dense structure of the solidified mass promoting high resistance to fat bloom in the solidified articles. The characteristics are achieved in a process free from any separate addition of seed material, whether it be in powder form or as a worked up batch suspension. The desirable characteristics are not achievable by prior known commercially available continuous tempering techniques and requires by the prior art the use of the techniques of seeding from a separate batch to a main flow of chocolate.

After an initial start-up period the process provides for a steady and constant content of stable β crystals in the continuous main flow of chocolate to be supplied to the continuously running moulding line, depositors or similar apparatuses requiring a continuous supply. The inventive process is creating the desirable content of at least stable βV crystals with microstructure in the mass as the already homogenously distributed content of cocoa butter in the chocolate mass is worked with higher intensity than before in a continuous tempering process free from any addition of seed material.

When the secondary flow is influenced by a shear inducing tempering process before being feed back even stable βVI crystals is made together with the stable βV crystals and worked up in the main flow. Though the stable βVI crystals are made in very small amounts they promotes the creation of the microstructure and consequently desirable dense structure of the solidified chocolate mass.

Optimal is when the secondary flow is branched off at the end of the third step, and is influenced by a shear inducing tempering process before being feed back into the second step, preferably at the beginning thereof. Then the additive recirculating effect of the feed back solution provides such intensity that a predominant content of stable βVI crystals is achieved in the tempered mass. The temperatures are kept so high in the second and the third steps that a dominating content of stable βVI crystals survives accompanied by a content of stable βV crystals. During solidification the content of stable βVI crystals promotes solidification of the remaining mass into stable βV crystals in microstructure. A surprisingly dense and fat bloom resistant structure of the solidified articles are achieved for a continuous seed-free tempering process.

The invention is explained further below by reference to preferred embodiments as well as the drawing, in which
figure 1 discloses schematically a tempering circuit working according to a first embodiment of the inventive idea,
figure 2 a tempering circuit working according to a second embodiment comprising a shear inducing tempering apparatus arranged in the feed back,
figure 3 a third embodiment disclosed in the same manner as in figure 2, and
figure 4 a fourth embodiment disclosed in the same manner as in figure 2 and 3.

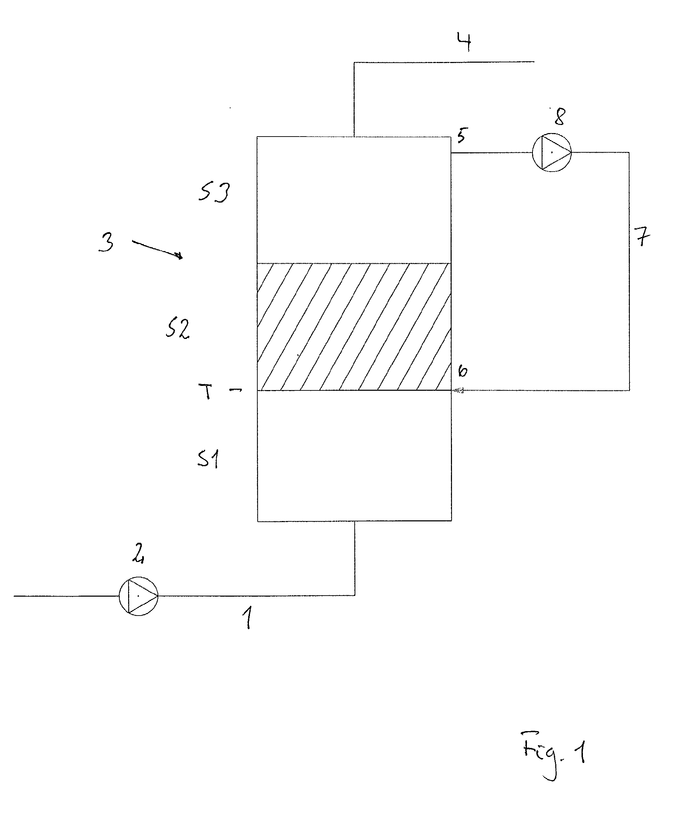

By the embodiment disclosed in figure 1 a main flow 1 of chocolate mass having a temperature around 40-50°C is continuously supplied via a pump 2 to a tempering apparatus 3. The tempering apparatus could be of any kind and construction such as having disc shaped stirring chambers arranged upon each others in a column or having a cylindrical stirring chamber provided with knifes scraping off the inside of the chamber. However decisive is, that todays tempering apparatuses provides a content of stable crystals such as the stable βV crystals and is fully controllable in mass temperature.

The apparatus according to the invention comprises a first process step S1, a second step S2 and a third step S3. By the apparatus disclosed in figures 1-4 the mass temperature must be controlable at least at the end of the first step and through the second and third steps.

In the first step S1 the mass is cooled down to a temperature T below 37°C, so that at least the desirable high melting stable β crystals survives.

In the second step S2 the actual crystallisation takes place and in step 3 the mass temperature is kept constant or raised slightly for melting out the instable crystals. Via the conduit 4 the continuous flow of ready tempered mass is supplied to the consuming production line or apparatus.

At the end of the third step S3 is provided an outlet opening 5. An inlet opening 6 is provided at the transition between the first and second steps or at the beginning of the second step S2. The openings 5 and 6 are connected via a conduit 7 comprising a pump 8 creating a feed back of a branched off chocolate flow.

After an initial start up period a synergic effect occurs and a stable and high amount of stable βV crystals are build up in the main flow. The crystals are of microstructure and provides a high quality chocolate without the need for any separate seeding process.

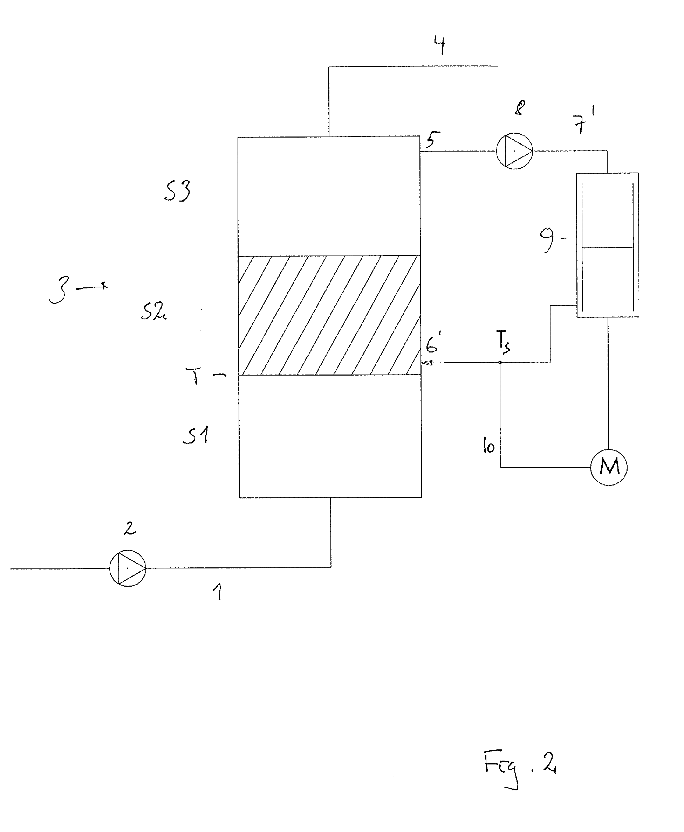

In the embodiment disclosed in figure 2 the outlet opening 5 is connected with the inlet 6' via a feed back conduit 7'. In the feed back conduit 7' is arranged a separate tempering apparatus 9 schematically disclosed as a so-called "high" shear temper capable of inducing a considerable shear effect to the branched off secondary chocolate flow.

The additive recirculating effect of the embodiment disclosed in figure 2 provides such intensity, that a predominant content of stable βVI crystals is achieved in the main flow. The temperatures are kept so high in the second and the third steps that a dominating content of stable βVI crystals survives accompanied by a content of stable βV crystals. During solidification the content of stable βVI crystals promotes solidification of the remaining mass into stable βV crystals in microstructure. A surprisingly dense and fat bloom resistant structure of the solidified articles are achieved for a continuous seed-free tempering process.

Advantageously, the high energy input provided by the shear inducing temper 9 is controlled by measuring the temperature Ts towards the inlet opening 6' and controlling the motor revolutions via a wire 10 dependent of a maximum mass temperature setting Ts. Ts is controlled not to excess the limit of 37°C.

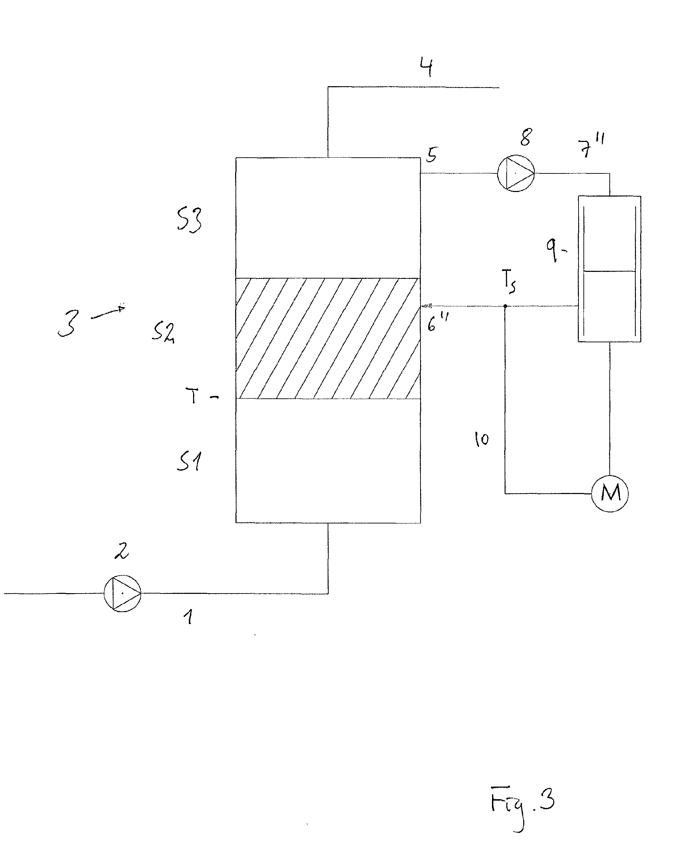

By the embodiment disclosed in figure 3 the inlet opening 6" to the main flow in the tempering apparatus is moved further on towards the end of the second step S2. Then the synergic effect of the building up of stable βV and VI crystals are mainly achieved in the third step S3.

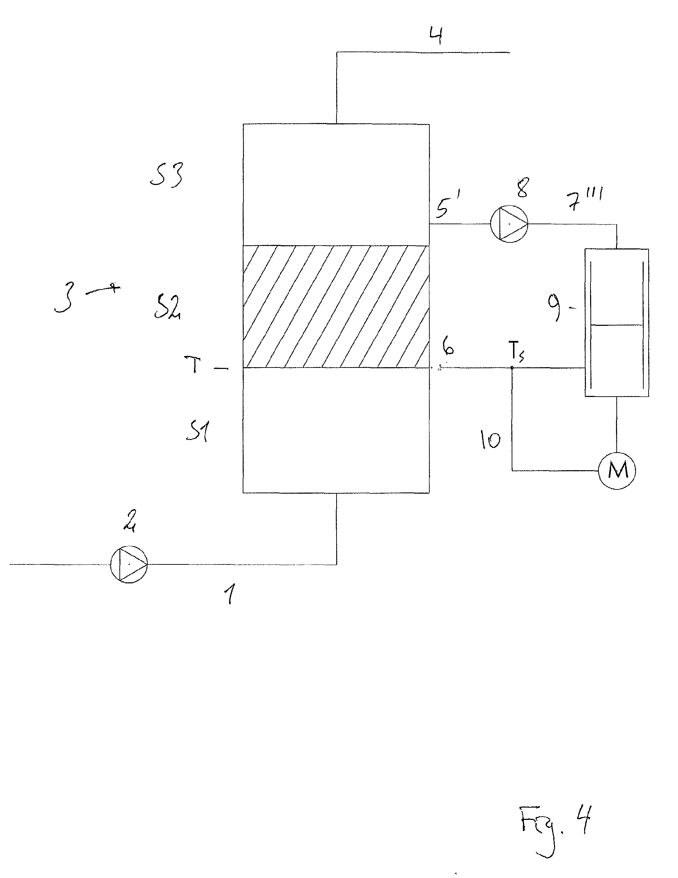

By the embodiment disclosed in figure 4 the outlet opening 5' is arranged closer to the beginning of the third step S3 than in the previous figures. The inlet opening 6 is then arranged at the transition between the first and second steps S1 and S2. The major part of the feed back effect is then concentrated on the second step S2.

## Claims

1. Process for tempering a continuous main flow of chocolate or chocolate-like mass, which at the end of a first step is cooled down to below 37°C, in a second step is influenced to creation of stable crystals, and in a third step is stabilized for growth and further creation of crystals,
**characterized in, that**
a secondary flow of chocolate is branched off from the main flow in the third step, and is being returned to the second step of the main flow in a feed back.

2. Process according to claim 1, **characterized in, that** the secondary flow is influenced by a shear inducing tempering process before being feed back.

3. Process according to claim 1, **characterized in, that** the secondary flow is branched off at the end of the third step, and is influenced by a shear inducing tempering process before being feed back.

4. Process according to claim 1, **characterised in, that** the temperature of the main flow is lower than the melting temperature of the Beta VI crystals of the particular chocolate at the end of the first step.

5. Process according to claim 1, **characterised in, that** the temperature of the main flow is lower than the melting temperature of the Beta V crystals of the particular chocolate at the end of the first step.

6. Apparatus for tempering a continuous flow of chocolate mass or chocolate-like mass comprising a first cooling section adapted to cool down the mass to below 37°C at the end of the first section, a second cooling section adapted to create stable crystals in the mass, and a third section with stirring means adapted to provide a constant or slight rise in temperature,
**characterised in, that**
a conduit comprising pump means is arranged between an outlet opening of the third section and an inlet opening in the second section.

7. Apparatus according to claim 6, **characterised in, that** the outlet opening is arranged at the beginning of the third section and that a shear inducing tempering machine is arranged in the feed back conduit.

8. Apparatus according to claim 6, **characterised in, that** the outlet opening is arranged at the end of the third section and that a shear inducing tempering machine is arranged in the feed back conduit.
